# EUROPEAN PATENT APPLICATION

(11) **EP 4 782 404 A2**
(43) Date of publication of application: **29.07.2026**
(21) Application number: 25825909.2
(22) Date of filing: 23.06.2025
(51) Int. Cl.: C01D 15/08, H01M 10/54

(54) **PROCESS FOR PRODUCING BATTERY-GRADE LITHIUM CARBONATE FROM WASTE WATER SOLUTION CONTAINING LITHIUM AND SODIUM RECOVERED FROM TERNARY BATTERY**

(30) Priority: 24.06.2024 CN 202410820989
(71) Applicant: HEBEI LEHENG ENERGY SAVING EQUIPMENT CO., LTD., Hebei 065300 (CN)
(72) Inventor: LU, Zhengjia, Langfang, Hebei 065300 (CN); WANG, Tao, Langfang, Hebei 065300 (CN); LI, Na, Langfang, Hebei 065300 (CN); LI, Xuejie, Langfang, Hebei 065300 (CN); QI, Pengkai, Langfang, Hebei 065300 (CN); FENG, Caiyun, Langfang, Hebei 065300 (CN)
(74) Representative: Cleanthous, Marinos
(86) International application number: PCT/CN2025/102711
(87) International publication number: WO 2026/001877

(57) **Abstract**

Disclosed is a process for producing battery-grade lithium carbonate from a wastewater solution containing lithium and sodium recovered from a ternary battery, including the following steps: S1: adding activated carbon into the wastewater solution containing lithium and sodium for mixing to obtain a pretreated solution; S2: adding an extracting agent into the pretreated solution for mixing, and performing a first post-treatment for lithium precipitation, to obtain a lithium precipitation slurry and a lithium precipitation mother solution; and S3: performing a second post-treatment for the lithium precipitation slurry, to obtain battery-grade lithium carbonate. In S2, the extracting agent includes 2-ethylhexyl hydrogen-2-ethylhexyl phosphonate and 1-ethyl-3-methylimidazolium tetrafluoroborate. The technical solution described above solves the problem of low recovery rate in lithium carbonate extraction in the related art.

## Description

### TECHNICAL FIELD

The present disclosure relates to the field of lithium extraction technology, and specifically to a process for producing battery-grade lithium carbonate from a wastewater solution containing lithium and sodium recovered from a ternary battery.

### BACKGROUND

A large number of scrapped ternary batteries after use need to undergo safe, environmentally friendly, and efficient treatment every year. As a result, extensive research is conducted on processes for producing battery-grade lithium carbonate from wastewater solution containing lithium and sodium recovered from ternary batteries. Among conventional lithium extraction technologies, a solvent extraction method with advantages such as simple operation, high efficiency, and low cost has been studied widely and is developing rapidly for lithium extraction. However, it has shortcomings such as an insufficient effect of lithium extraction and a low recovery rate of lithium carbonate. Therefore, it is necessary to develop a process with a higher recovery rate of lithium carbonate, to promote recycling the wastewater solution recovered from ternary batteries.

### SUMMARY

The present disclosure provides a process for producing battery-grade lithium carbonate from a wastewater solution containing lithium and sodium recovered from a ternary battery, to solve the problem of low recovery rate in lithium carbonate extraction in the related art.

The technical solution of the present disclosure is as follows:
The present disclosure provides a process for producing battery-grade lithium carbonate from a wastewater solution containing lithium and sodium recovered from a ternary battery, including the following steps:
S1: adding activated carbon into the wastewater solution containing lithium and sodium for mixing to obtain a pretreated solution;
S2: adding an extracting agent into the pretreated solution for mixing, and performing a first post-treatment for lithium precipitation, to obtain a lithium precipitation slurry and a lithium precipitation mother solution; and
S3: performing a second post-treatment for the lithium precipitation slurry, to obtain the battery-grade lithium carbonate;
in S2, the extracting agent includes 2-ethylhexyl hydrogen-2-ethylhexyl phosphonate and 1-ethyl-3-methylimidazolium tetrafluoroborate.

As a further technical solution, a mass ratio of 2-ethylhexyl hydrogen-2-ethylhexyl phosphonate to 1-ethyl-3-methylimidazolium tetrafluoroborate is 3:2 to 4:1.

In the present disclosure, when the mass ratio of 2-ethylhexyl hydrogen-2-ethylhexyl phosphonate to 1-ethyl-3-methylimidazolium tetrafluoroborate is adjusted to 3:2-4:1, the recovery rate of battery-grade lithium carbonate produced from a wastewater solution containing lithium and sodium recovered from a ternary battery is further raised.

As a further technical solution, a duration of the mixing in S1 is 40-50 min; and a duration of the mixing in S2 is 60-90 min.

As a further technical solution, the first post-treatment includes evaporation for concentration, continuous flash evaporation and freezing crystallization, alkaline decontamination, and resin column filtration in sequence; and the second post-treatment includes filtration, washing, drying, and crushing in sequence.

As a further technical solution, for the alkaline decontamination, a temperature is 80-90°C, a pH value is 11-12, and a duration is 30-60 min.

As a further technical solution, a resin in the resin column includes one or more models selected from the group consisting of LS-1000, CH-93, CH-90, and LSC-500.

As a further technical solution, the resin in the resin column includes one or two models selected from the group consisting of CH-90 and LSC-500.

In the present disclosure, when a resin column is used to adsorb calcium and magnesium ions, especially when the resin in the resin column is CH-90 or LSC-500, the purity of battery-grade lithium carbonate produced from a wastewater solution containing lithium and sodium recovered from a ternary battery may be further improved.

As a further technical solution, the lithium precipitation mother solution may be mixed with sulfuric acid for acidification, with a pH value controlled at 2-4 and a duration of acidification longer than 30 min; then liquid caustic soda is added to readjust the pH value to 7-8; and a mixture solution containing lithium and sodium after acidification may be returned to a raw material section for reusing.

As a further technical solution, a particle size of the battery-grade lithium carbonate is 4-6 µm.

As a further technical solution, sodium carbonate is added during the lithium precipitation for reaction at 90-95°C for 3-4 h.

The working principle and beneficial effect of the present disclosure are as follows:

In the present disclosure, 2-ethylhexyl hydrogen-2-ethylhexyl phosphonate and 1-ethyl-3-methylimidazolium tetrafluoroborate are used together as the extracting agent for lithium carbonate extraction, achieving a synergistic effect. This significantly raises the recovery rate of battery-grade lithium carbonate produced from a wastewater solution containing lithium and sodium recovered from a ternary battery.

### BRIEF DESCRIPTION OF DRAWINGS

### DETAILED DESCRIPTION OF THE EMBODIMENTS

The technical solution in the embodiments of the present disclosure will be clearly and completely described below with reference to the embodiments of the present disclosure. Obviously, the embodiments described are only a part of, not all, the embodiments of the present disclosure. Based on the embodiments of the present disclosure, all other embodiments obtained by those of ordinary skill in the art without creative work are within the scope of protection of the present disclosure.

### Embodiment 1

A process for producing battery-grade lithium carbonate from a wastewater solution containing lithium and sodium recovered from a ternary battery, including the following steps:
S1: adding activated carbon into the wastewater solution containing lithium and sodium for mixing for 40 min, to obtain a pretreated solution;
S2: adding 200 mL of an extracting agent into 500 mL of the pretreated solution for mixing for 60 min, performing evaporation for concentration, continuous flash evaporation and freezing crystallization, alkaline decontamination (for 30 min at 90°C with a pH value of 11), and resin column filtration with CH-93 resin, and then adding sodium carbonate for lithium precipitation at 90°C for 4 h, to obtain a lithium precipitation slurry and a lithium precipitation mother solution; in which, the lithium precipitation mother solution may be mixed with sulfuric acid for acidification for 50 min, with a pH value controlled at 2, then liquid caustic soda is added to readjust the pH value to 8, and a mixture solution containing lithium and sodium after acidification may be returned to a raw material section for reusing; and
S3: performing a three-in-one treatment for the lithium precipitation slurry, including filtration, washing, and drying, and then crushing to obtain battery-grade lithium carbonate with a particle size of 5 µm. Specifically, the extracting agent includes 2-ethylhexyl hydrogen-2-ethylhexyl phosphonate and 1-ethyl-3-methylimidazolium tetrafluoroborate, with a mass ratio of 1:4.

According to the calculation and testing results, the recovery rate of lithium carbonate is 97.8%, and its purity is 99.0%.

### Embodiment 2

A process for producing battery-grade lithium carbonate from a wastewater solution containing lithium and sodium recovered from a ternary battery, including the following steps:
S1: adding activated carbon into the wastewater solution containing lithium and sodium for mixing for 50 min, to obtain a pretreated solution;
S2: adding 400 mL of an extracting agent into 500 mL of the pretreated solution for mixing for 90 min, performing evaporation for concentration, continuous flash evaporation and freezing crystallization, alkaline decontamination (for 60 min at 80°C with a pH value of 12), and resin column filtration with CH-93 resin, and then adding sodium carbonate for lithium precipitation at 95°C for 4 h, to obtain a lithium precipitation slurry and a lithium precipitation mother solution; in which, the lithium precipitation mother solution may be mixed with sulfuric acid for acidification for 60 min, with a pH value controlled at 4, then liquid caustic soda is added to readjust the pH value to 7, and a mixture solution containing lithium and sodium after acidification may be returned to a raw material section for reusing; and
S3: performing a three-in-one treatment for the lithium precipitation slurry, including filtration, washing, and drying, and then crushing to obtain battery-grade lithium carbonate with a particle size of 5 µm. Specifically, the extracting agent includes 2-ethylhexyl hydrogen-2-ethylhexyl phosphonate and 1-ethyl-3-methylimidazolium tetrafluoroborate, with a mass ratio of 1:4.

According to the calculation and testing results, the recovery rate of lithium carbonate is 98.0%, and its purity is 99.0%.

### Embodiment 3

A process for producing battery-grade lithium carbonate from a wastewater solution containing lithium and sodium recovered from a ternary battery, including the following steps:
S1: adding activated carbon into the wastewater solution containing lithium and sodium for mixing for 45 min, to obtain a pretreated solution;
S2: adding 300 mL of an extracting agent into 500 mL of the pretreated solution for mixing for 75 min, performing evaporation for concentration, continuous flash evaporation and freezing crystallization, alkaline decontamination (for 50 min at 90°C with a pH value of 11), and resin column filtration with CH-93 resin, and then adding sodium carbonate for lithium precipitation at 95°C for 3 h, to obtain a lithium precipitation slurry and a lithium precipitation mother solution; in which, the lithium precipitation mother solution may be mixed with sulfuric acid for acidification for 60 min, with a pH value controlled at 3, then liquid caustic soda is added to readjust the pH value to 8, and a mixture solution containing lithium and sodium after acidification may be returned to a raw material section for reusing; and
S3: performing a three-in-one treatment for the lithium precipitation slurry, including filtration, washing, and drying, and then crushing to obtain battery-grade lithium carbonate with a particle size of 5 µm. Specifically, the extracting agent includes 2-ethylhexyl hydrogen-2-ethylhexyl phosphonate and 1-ethyl-3-methylimidazolium tetrafluoroborate, with a mass ratio of 1:4.

According to the calculation and testing results, the recovery rate of lithium carbonate is 98.2%, and its purity is 99.1%.

### Embodiment 4

The only difference between this embodiment and Embodiment 3 lies in that a mass ratio of 2-ethylhexyl hydrogen-2-ethylhexyl phosphonate to 1-ethyl-3-methylimidazolium tetrafluoroborate in the extracting agent is 5:1.

According to the calculation and testing results, the recovery rate of lithium carbonate is 98.0%, and its purity is 99.2%.

### Embodiment 5

The only difference between this embodiment and Embodiment 3 lies in that a mass ratio of 2-ethylhexyl hydrogen-2-ethylhexyl phosphonate to 1-ethyl-3-methylimidazolium tetrafluoroborate in the extracting agent is 3:2.

According to the calculation and testing results, the recovery rate of lithium carbonate is 99.3%, and its purity is 99.2%.

### Embodiment 6

The only difference between this embodiment and Embodiment 3 lies in that a mass ratio of 2-ethylhexyl hydrogen-2-ethylhexyl phosphonate to 1-ethyl-3-methylimidazolium tetrafluoroborate in the extracting agent is 4:1.

According to the calculation and testing results, the recovery rate of lithium carbonate is 99.7%, and its purity is 99.1%.

### Embodiment 7

The only difference between this embodiment and Embodiment 6 lies in that CH-93 resin is replaced with LS-1000 resin.

According to the testing results, the purity of lithium carbonate is 99.2%.

### Embodiment 8

The only difference between this embodiment and Embodiment 6 lies in that CH-93 resin is replaced with CH-90 resin.

According to the testing results, the purity of lithium carbonate is 99.6%.

### Embodiment 9

The only difference between this embodiment and Embodiment 6 lies in that CH-93 resin is replaced with LSC-500 resin.

According to the testing results, the purity of lithium carbonate is 99.8%.

### Comparative Example 1

The only difference between this comparative example and Embodiment 3 lies in that the extracting agent is 2-ethylhexyl hydrogen-2-ethylhexyl phosphonate.

According to the calculation and testing results, the recovery rate of lithium carbonate is 94.0%.

### Comparative Example 2

The only difference between this comparative example and Embodiment 3 lies in that the extracting agent is 1-ethyl-3-methylimidazolium tetrafluoroborate.

According to the calculation and testing results, the recovery rate of lithium carbonate is 93.5%.

### Comparative Example 3

The only difference between this comparative example and Embodiment 3 lies in that the extracting agent includes tributyl phosphate and 1-ethyl-3-methylimidazolium tetrafluoroborate.

According to the calculation and testing results, the recovery rate of lithium carbonate is 91.6%.

### Comparative Example 4

The only difference between this comparative example and Embodiment 3 lies in that the extracting agent includes 2-ethylhexyl hydrogen-2-ethylhexyl phosphonate and 1-vinyl-3-ethylimidazolium acetate.

According to the calculation and testing results, the recovery rate of lithium carbonate is 92.2%.

By comparing the data of Embodiments 1 to 9 and Comparative Examples 1 to 4, it can be found that compared with Comparative Examples 1 to 4, Embodiments 1 to 9 have a higher recovery rate of lithium carbonate, which indicates that when 2-ethylhexyl hydrogen-2-ethylhexyl phosphonate and 1-ethyl-3-methylimidazolium tetrafluoroborate are used together as the extracting agent for lithium carbonate extraction, they significantly raise the recovery rate of battery-grade lithium carbonate produced from wastewater solution containing lithium and sodium recovered from a ternary battery.

By comparing the data of Embodiments 3 to 6, it can be found that compared with Embodiments 3 and 4, Embodiments 5 and 6 have a higher recovery rate of lithium carbonate, which indicates that when the mass ratio of 2-ethylhexyl hydrogen-2-ethylhexyl phosphonate to 1-ethyl-3-methylimidazolium tetrafluoroborate is adjusted to the range from 3:2 to 4:1, the recovery rate of battery-grade lithium carbonate produced from wastewater solution containing lithium and sodium recovered from ternary battery is further raised.

By comparing the data of Embodiments 6 to 9, it can be found that compared with Embodiments 6 and 7, Embodiments 8 and 9 achieve a higher purity of lithium carbonate, which indicates that when a resin column is used to adsorb calcium and magnesium ions, especially when a resin in the resin column is CH-90 or LSC-500, the purity of battery-grade lithium carbonate produced from a wastewater solution containing lithium and sodium recovered from a ternary battery is further improved.

The above are only preferred embodiments of the present disclosure and are not intended to limit the present disclosure. Any modifications, equivalents, and improvements made within the spirit and principles of the present disclosure shall fall within the scope of protection of the present disclosure.

## Claims

1. A process for producing battery-grade lithium carbonate from a wastewater solution containing lithium and sodium recovered from a ternary battery, comprising the following steps:
S1: adding activated carbon into the wastewater solution containing lithium and sodium for mixing to obtain a pretreated solution;
S2: adding an extracting agent into the pretreated solution for mixing, and performing a first post-treatment for lithium precipitation, to obtain a lithium precipitation slurry and a lithium precipitation mother solution; and
S3: performing a second post-treatment for the lithium precipitation slurry, to obtain the battery-grade lithium carbonate, wherein
in S2, the extracting agent includes 2-ethylhexyl hydrogen-2-ethylhexyl phosphonate and 1-ethyl-3-methylimidazolium tetrafluoroborate.

2. The process for producing battery-grade lithium carbonate from a wastewater solution containing lithium and sodium recovered from a ternary battery according to claim 1, **characterized in that** a mass ratio of 2-ethylhexyl hydrogen-2-ethylhexyl phosphonate to 1-ethyl-3-methylimidazolium tetrafluoroborate is 3:2 to 4:1.

3. The process for producing battery-grade lithium carbonate from a wastewater solution containing lithium and sodium recovered from a ternary battery according to claim 1, **characterized in that** a duration of the mixing in S1 is 40-50 min; and a duration of the mixing in S2 is 60-90 min.

4. The process for producing battery-grade lithium carbonate from a wastewater solution containing lithium and sodium recovered from a ternary battery according to claim 1, **characterized in that** the first post-treatment comprises evaporation for concentration, continuous flash evaporation and freezing crystallization, alkaline decontamination, and resin column filtration in sequence; and the second post-treatment comprises filtration, washing, drying, and crushing in sequence.

5. The process for producing battery-grade lithium carbonate from a wastewater solution containing lithium and sodium recovered from a ternary battery according to claim 4, **characterized in that** for the alkaline decontamination, a temperature is 80-90°C, a pH value is 11-12, and a duration is 30-60 min.

6. The process for producing battery-grade lithium carbonate from a wastewater solution containing lithium and sodium recovered from a ternary battery according to claim 4, **characterized in that** a resin in the resin column comprises one or more models selected from the group consisting of LS-1000, CH-93, CH-90, and LSC-500.

7. The process for producing battery-grade lithium carbonate from a wastewater solution containing lithium and sodium recovered from a ternary battery according to claim 6, **characterized in that** the resin in the resin column comprises one or two models selected from the group consisting of CH-90 and LSC-500.

8. The process for producing battery-grade lithium carbonate from a wastewater solution containing lithium and sodium recovered from a ternary battery according to claim 1, **characterized in that** the lithium precipitation mother solution may be mixed with sulfuric acid for acidification, with a pH value controlled at 2-4 and a duration of acidification longer than 30 min; then liquid caustic soda is added to readjust the pH value to 7-8, and a mixture solution containing lithium and sodium after acidification may be returned to a raw material section for reusing.

9. The process for producing battery-grade lithium carbonate from a wastewater solution containing lithium and sodium recovered from a ternary battery according to claim 1, **characterized in that** a particle size of the battery-grade lithium carbonate is 4-6 µm.

10. The process for producing battery-grade lithium carbonate from a wastewater solution containing lithium and sodium recovered from a ternary battery according to claim 1, **characterized in that** sodium carbonate is added during the lithium precipitation for reaction at 90-95°C for 3-4 h.
